# EUROPÄISCHE PATENTSCHRIFT

(11) **EP 4 119 293 B1**
(45) Veröffentlichungstag und Bekanntmachung des Hinweises auf die Patenterteilung: **09.09.2026**
(21) Anmeldenummer: 22183250.4
(22) Anmeldetag: 06.07.2022
(51) Int. Cl.: B24C 1/04, B24C 3/32, B24C 5/00, B24C 7/00, H01M 4/139, H01M 4/04, B24C 3/10, B24C 9/00, H01M 10/0525, H01M 10/0569

(54) **VERFAHREN UND SCHNEIDVORRICHTUNG ZUM SCHNEIDEN VON ELEKTRODENFOLIEN**
METHOD AND DEVICE FOR CUTTING ELECTRODE FILMS
PROCÉDÉ ET DISPOSITIF DE COUPE PERMETTANT DE COUPER DES FEUILLES D'ÉLECTRODE

(30) Priorität: 16.07.2021 DE 102021118459
(43) Veröffentlichungstag der Anmeldung: 18.01.2023
(73) Patentinhaber: PowerCo SE, 38239 Salzgitter (DE)
(72) Erfinder: Jamadar, Kartik, 38442 Wolfsburg (DE); Gangurde, Priyanka, 422006 Nashik (IN)
(74) Vertreter: karo IP

(56) Entgegenhaltungen:
- DE-A1- 102019 200 419
- JP-A- 2015 146 237
- JP-B2- 5 177 647
- US-A1- 2004 235 395
- US-A1- 2012 252 326

## Beschreibung

Die Erfindung betrifft ein Verfahren und eine Schneidvorrichtung zum Schneiden von Elektrodenfolien, insbesondere von beschichten Elektrodenfolien.

Für den Antrieb von Kraftfahrzeugen werden vermehrt Batterien, insbesondere Lithium-Ionen-Batterien eingesetzt. Batterien werden üblicherweise aus Zellen zusammengesetzt, wobei jede Zelle einen Stapel von Anoden-, Kathoden- und Separatorfolien aufweist, die ggf. in Form von Lagen bzw. Materialschichten vorliegen. Zumindest ein Teil der Anoden- und Kathodenfolien sind als elektrische Strom-Ableiter ausgeführt, zur Ableitung des von der Zelle bereitgestellten Stroms hin zu einem außerhalb der Zelle angeordneten Verbraucher. Die einzelnen Elemente eines Stapels werden im Folgenden auch als Elektroden bzw. Folien bezeichnet.

Die einzelnen Folien werden insbesondere als Endlosmaterial bereitgestellt, ggf. beschichtet, z. B. mit einem Aktivmaterial, und zumindest teilweise beschnitten. Unbeschichtete Bereiche von beschichteten Folien können als Ableiter eingesetzt werden.

Beim Schneiden von Elektroden werden folgende Schnitte durchgeführt:
- Schlitzen: Die Schnittlinie verläuft entlang der Erstreckung (x-Richtung) des Endlosmaterials zur Aufteilung des breiten Ausgangsmaterials in mehrere weniger breite Streifen Endlosmaterial;
- Ausklinken: mit der Schnittlinie werden die Ableiter aus dem Endlosmaterial herausgebildet; die Schnittlinien verlaufen längs und quer zur Erstreckung des Endlosmaterials;
- Abtrennen: die Schnittlinie verläuft quer zur Erstreckung des Endlosmaterials; durch das Abtrennen werden die Elektrodenfolien von dem Endlosmaterial abgeschnitten und die einzelnen Lagen des Stapels gebildet.

Der aktuelle Stand der Technik beim Schneiden von Lithium-Ionen-Batterie-Elektroden nutzt das Scherprinzip, bei dem ein oberes Messer (oberhalb einer zu schneidenden Lage) in Kontakt mit einem unteren Messer (unterhalb einer zu schneidenden Lage) kommt. Der Kontakt führt zu einer hohen Reibung und damit zu schnellerem Werkzeugverschleiß. Das Schlitzen mit hohen Geschwindigkeiten vergrößert dieses Problem. Deshalb ist derzeit die Schneidgeschwindigkeit auf maximal 120 m/min [Meter/Minute] begrenzt.

Das Schlitzen wird insbesondere durch obere und untere Kreismesser aus Wolframkarbid ausgeführt. Diese Messer müssen etwa nach 200 km [Kilometer] Schnittlinie nachgeschliffen werden. Ein so häufiges Nachschleifen der Messer verursacht hohe Betriebskosten.

Das Ausklinken und das Abtrennen werden insbesondere als separate Arbeitsgänge nach dem Schlitzen durchgeführt. Dies geschieht entweder mechanisch oder per Laser. Aufgrund der separaten Maschinen für das Schlitzen und Ausklinken ist ein höherer Investitions- und Platzbedarf erforderlich.

Das Laserschneiden ist ein energieintensiver Prozess (~ 6 kW [Kilowatt] Leistungsbedarf der Anlage) und erzeugt eine Wärmeeinflusszone. Das Aktivmaterial der beschichteten Elektrode in der hitzebeeinflussten Zone wird verbrannt, wodurch die Batteriekapazität verringert wird. Der Laserprozess ist zudem ineffizient, weil die meisten der konzentrierten Lichtstrahlen von der Kupfer- bzw. Aluminiumoberfläche der Elektrode reflektiert werden. Man benötigt insbesondere einen speziellen grünen Laser, um eine bessere Lichtadsorption zu erreichen. Dieser Lasertyp ist allerdings teuer und erlaubt keine höheren Geschwindigkeiten als 80 m/min.

Mechanisches Ausklinken hat einen hohen Werkzeugverschleiß. Außerdem muss der Vorschub der Elektroden in regelmäßigen Abständen angehalten werden, um den Prozessschritt auszuführen. Dies führt zu reduzierten Schnittgeschwindigkeiten. Die Bewegung der Elektrode in z-Richtung (Dickenrichtung) während des Schlitzvorgangs verursacht eine Welligkeit an der Schlitzkante bzw. Schnittlinie. Eine Kontrolle dieser Welligkeit ist nicht möglich, da kein Gegenwerkzeug vorhanden ist.

Eine Begrenzung der Elektrodenbewegung in y-Richtung (Breitenrichtung) ist insbesondere nicht vorgesehen. Dies führt zu einer Welligkeit in y-Richtung.

Durch das Fehlen einer Gegenkraft beim Schlitzen und mechanischen Ausklinken kann es zu einer Gratbildung kommen. Dadurch kann insbesondere ein Kurzschluss in der Batteriezelle entstehen. Aktivmaterial der geschnittenen Elektrode kann an den Schneidkanten hängenbleiben. Dies erfordert eine umfangreiche Reinigung der Schneidkante und auch des Messers. Das Anhaften von Partikeln an den Schneidkanten, die größer als 10 µm [Mikrometer] sind, kann ebenfalls einen Kurzschluss in der Batteriezelle verursachen.

Kurz gesagt, das Schneiden mit dem Werkzeug (mechanisches Schneiden) und/oder das Schneiden mit Energie (Laser) kann dazu führen, dass die Schnittgeschwindigkeit beeinträchtigt, die Kosten erhöht, die Batteriekapazität verringert und/oder die Sicherheit der Batteriezelle reduziert ist.

Diese Nachteile könnten wie folgt reduziert werden:
- ausgiebiges Reinigen der Schneide beim Schneiden mit einer Lösung aus Alkohol und Paraffinöl;
- Reinigen der Schneidkante beim mechanischen Schneiden durch berührende und berührungslose Reinigung; bei der berührungslosen Reinigung wird ionisierte Luft auf die Schneidkante geblasen, um die statische Aufladung auf nichtleitenden Partikeln zu neutralisieren; derartig neutralisierte Partikel können dann abgeblasen oder abgesaugt werden;
- Verwendung eines grünen Lasers, weil dieser die geringste Reflexion von der metallischen Oberfläche der Elektrode hat;
- Verringerung der Schnittgeschwindigkeit, so dass der Werkzeugverschleiß reduziert werden kann;
- Aufweichung der Toleranz der Schneidkante (hinsichtlich zulässiger Gratgröße und Partikelanhaftung), wodurch allerdings die Batteriesicherheit tatsächlich verringert wird.

Die Hauptnachteile bekannter, im Einsatz befindlicher Anlagen sind wie folgt:
- ein hoher Verschleiß des Schlitzmessers; es muss alle 200 km nachgeschliffen werden; Wolframkarbid und andere Hartmetalle sowie Keramik als Werkzeugmaterial reduzieren diese Verschleißrate, sind aber sehr teuer;
- eine umfangreiche Reinigungsstation ist beim Schneiden erforderlich; ggf. ist eine Elektrodenreinigungsstation nach dem Schlitzen und Laserschneiden erforderlich, um Partikelverunreinigungen von der Elektrode zu entfernen; dies erhöht die Kosten, die Zykluszeit und/oder den Platzbedarf der Maschine;
- das mechanische Längsteilen (Schlitzen) ist sehr empfindlich gegenüber Schnittparametern wie Schnittwinkel, Schnittgeschwindigkeit, Kraft zwischen Ober- und Untermesser, Rauheit der Messeroberfläche und Maschinenvibration; geringfügige Änderungen führen zu Gratbildung und zusätzlicher Partikelkontamination;
- für das kontinuierliche Ausklinken und Abtrennen gibt es derzeit keine realisierbare Lösung; das bedeutet, dass während des Ausklinkens und Abtrennens die Elektrodenbewegung vorübergehend angehalten wird; dies reduziert die Geschwindigkeit des Ausklinkens und Abtrennens; die maximale Geschwindigkeit beim Ausklinken und Abtrennen beträgt 60 m/min.

Es sind die folgenden Techniken bekannt, um einige der genannten Nachteile zu überwinden:
- Verwendung von hartem Material wie chromreichem Stahl, Keramik und Wolframkarbid als Werkzeugmaterial, um den Verschleiß zu reduzieren;
- der kleinste Radius beim Ausklinken wird auf 2 mm [Millimeter] eingestellt; es ist nicht möglich, einen kleineren Radius zwischen zwei Schneidkanten zu realisieren (am Schnittpunkt von Längs- und Querschnitt);
- eine kontinuierliche Bewegung der Elektrode während des Ausklinkens und des Abtrennens kann nur bei wenigen Fertigungsspezialisten ausgeführt werden; das bedeutet, dass die Laserpistole während des Schneidens in einem Winkel fährt, so dass der endgültige Beschneidungsschnitt "perfekt" gerade ist; dies erfordert eine sehr präzise Steuerung des Verfahrwegs der Laserpistole und der Elektrodenbewegung;
- Verwendung verschiedener Schneidprinzipien wie Rotationsschneiden zum Schlitzen und Ausklinken; beim Rotationsschnitt ist die Qualität des Querschnitts im Vergleich zum Längsschnitt schlechter;
- Verwendung eines grünen Lasers und hoher Leistung (6 kW) zum Schneiden der Anode;
- beim Laserschneiden der Elektrode wird eine Kühlplatte verwendet, um eine schnelle Abkühlung zu erreichen und die Wärmeeinflusszone zu reduzieren.

Im Ergebnis bedeutet das, dass das Schneiden der Batterieelektrode mit mechanischen Werkzeugen oder mit Energie (Laser) immer noch ein fehlerbehafteter, toleranzreicher, kostenintensiver und/oder unzuverlässiger Prozess ist.

Aus der DE 10 2017 218 137 A1 ist u. a. ein Verfahren zur Herstellung einer Elektrodenanordnung bekannt. Dabei wird ein Elektrodenmaterial mittels Ultraschallschneiden, also unter Verwendung einer vibrierenden Schneidkante, getrennt. Die Schneidkante kontaktiert das Elektrodenmaterial.

Die DE 10 2019 200 419 A1 ist auf ein Verfahren zum Schneiden eines Werkstücks mit einem druckbeaufschlagen pulsierenden Fluidstrahl gerichtet. Dabei wird der Injektor zu Schwingungen angeregt, so dass die Schneidwirkung verbessert wird.

Die JP 2015 146 237 A ist auf ein Verfahren zum Schneiden von Elektrodenfolien gerichtet, wobei dabei ein Fluidstrahl unter einem Winkel auf das Werkstück gelenkt wird. JP 2015 146 237 A offenbart ferner eine Schneidvorrichtung gemäß dem Oberbegriff des Anspruchs 12.

Die JP 5 177 647 B2 offenbart eine Vorrichtung zum Reinigen von Oberflächen mittels eines Slurry. Das Slurry wird über eine Ultraschalleinrichtung zu Schwingungen angeregt.

Die US 2012/252326 A1 ist auf eine Fluidstrahlvorrichtung gerichtet.

Aufgabe der vorliegenden Erfindung ist es, die mit Bezug auf den Stand der Technik angeführten Probleme zumindest teilweise zu lösen. Insbesondere soll ein Verfahren und eine Schneidvorrichtung zum Schneiden von Elektrodenfolien vorgeschlagen werden, durch die ein qualitativ hochwertiger Schnitt mit hoher Geschwindigkeit und bei möglichst geringem Verschleiß durchgeführt werden kann.

Zur Lösung dieser Aufgaben trägt ein Verfahren und eine Schneidvorrichtung mit den Merkmalen der unabhängigen Patentansprüche bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Verfahren zum Schneiden von Elektrodenfolien vorgeschlagen. Die Elektrodenfolien sind für einen Einsatz in einer Batteriezelle vorgesehen. Das Verfahren wird mit zumindest einer Schneidvorrichtung ausgeführt. Die Schneidvorrichtung umfasst zumindest ein Schneidwerkzeug, eine Schwingungseinrichtung und eine Partikelzuleitung.

Das Verfahren weist zumindest die folgenden Schritte auf:
a) Bereitstellen einer Elektrodenfolie mit einer Oberfläche;
b) Anordnen des Schneidwerkzeugs über der Elektrodenfolie in einem Abstand zu der Oberfläche;
c) Einleiten zumindest von Partikeln aus der Partikelzuleitung in die Schneidvorrichtung;
d) Anregen des Schneidwerkzeugs zu Schwingungen durch die Schwingungseinrichtung;
e) Beaufschlagen der Elektrodenfolie mit den Schwingungen des Schneidwerkzeugs über mindestens ein Partikel, das zwischen dem Schneidwerkzeug und der Elektrodenfolie angeordnet ist, so dass die Elektrodenfolie getrennt wird; wobei die Partikel auf der Oberfläche verteilt und von dem Schneidwerkzeug in Schwingung versetzt werden, so dass das Schneiden durch die Vibrations-Energie des Schneidwerkzeugs und durch die abrasive Wirkung der zwischen Schneidwerkzeug und Oberfläche angeordneten und vom Schneidwerkzeug bewegten Partikel erfolgt.

Die obige (nicht abschließende) Einteilung der Verfahrensschritte in a) bis e) soll vorrangig nur zur Unterscheidung dienen und keine Reihenfolge und/oder Abhängigkeit erzwingen. Auch die Häufigkeit der Verfahrensschritte kann variieren. Ebenso ist möglich, dass Verfahrensschritte einander zumindest teilweise zeitlich überlagern. Ganz besonders bevorzugt finden die Schritte c) bis e) zumindest zeitweise zeitlich parallel zueinander statt. Schritte c) bis e) erfolgen insbesondere nach den Schritten a) und b).

Eine Batteriezelle umfasst insbesondere ein, ein Volumen umschließendes Gehäuse und in dem Volumen angeordnet mindestens eine erste Elektrodenfolie einer ersten Elektrodenart, eine zweite Elektrodenfolie einer zweiten Elektrodenart und ein dazwischen angeordnetes Separatormaterial sowie einen Elektrolyten, z. B. einen flüssigen oder einen festen Elektrolyten.

Die Batteriezelle ist insbesondere eine Pouchzelle (mit einem verformbaren Gehäuse bestehend aus einer Pouchfolie) oder eine prismatische Zelle (mit einem formfesten Gehäuse). Eine Pouchfolie ist ein bekanntes verformbares Gehäuseteil, dass als Gehäuse für sogenannte Pouchzellen eingesetzt wird. Es handelt sich dabei um ein Kompositmaterial, z. B. umfassend einen Kunststoff und Aluminium.

Die Batteriezelle ist insbesondere eine Lithium-Ionen-Batteriezelle.

Die einzelnen Folien der Mehrzahl von Elektrodenfolien sind aufeinander angeordnet und bilden insbesondere einen Stapel. Die Elektrodenfolien sind jeweils unterschiedlichen Elektrodenarten zugeordnet, sind also als eine Anode oder eine Kathode ausgeführt. Dabei sind Anoden und Kathoden wechselweise und jeweils durch das Separatormaterial getrennt voneinander angeordnet.

Eine Batteriezelle ist ein Stromspeicher, der z. B. in einem Kraftfahrzeug zum Speichern von elektrischer Energie eingesetzt wird. Insbesondere weist z. B. ein Kraftfahrzeug eine elektrische Maschine zum Antrieb des Kraftfahrzeuges (einen Traktionsantrieb) auf, wobei die elektrische Maschine durch die in der Batteriezelle gespeicherte elektrische Energie antreibbar ist.

Gemäß Schritt a) erfolgt insbesondere ein Bereitstellen einer Elektrodenfolie mit einer Oberfläche. Die Elektrodenfolie wird insbesondere als Endlosmaterial bereitgestellt. Die Elektrodenfolie umfasst insbesondere ein Trägermaterial, insbesondere aus einem metallischen Material, dass ggf. und dabei zumindest teilweise beschichtet ausgeführt ist, z. B. mit einem Aktivmaterial. Die Elektrodenfolie weist zwei größte Seitenflächen mit einer theoretisch endlosen Länge in einer x-Richtung, eine Breite in einer y-Richtung und eine Dicke in einer z-Richtung auf. Die Erstreckung in z-Richtung ist dabei die geringste. Eine der Seitenflächen der Elektrodenfolie bildet vorliegend die Oberfläche.

Es wird eine Schneidvorrichtung bereitgestellt, zumindest umfassend ein Schneidwerkzeug, eine Schwingungseinrichtung sowie eine Partikelzuleitung. Weiter erfolgt ein Anordnen des Schneidwerkzeugs über der Elektrodenfolie in einem Abstand zu der Oberfläche (Schritt b)).

Das Schneidwerkzeug wird durch die Schwingungseinrichtung zu Schwingungen angeregt. Das Schneidwerkzeug kontaktiert die Oberfläche insbesondere nicht, bzw. nicht direkt. Insbesondere kontaktiert das Schneidwerkzeug die Oberfläche über mindestens ein Partikel, das zwischen dem Schneidwerkzeug und der Oberfläche angeordnet ist. Das Schneidwerkzeug kontaktiert also insbesondere das Partikel und bewegt das Partikel infolge der Schwingungen. Das derart angeregte Partikel erzeugt die Schneidwirkung an der Elektrodenfolie. Der Abstand zwischen Schneidwerkzeug und Oberfläche kann also insbesondere durch einzelne Partikel überbrückt werden.

Weiter wird eine Partikelzuleitung bereitgestellt. Gemäß Schritt c) erfolgt insbesondere ein Einleiten zumindest von Partikeln aus der Partikelzuleitung in die Schneidvorrichtung. Diese Zuleitung dient insbesondere dem Transport der Partikel hin zu der Schneidvorrichtung bzw. hin zu dem Schneidwerkzeug bzw. hin zu der gegenüber dem Schneidwerkzeug angeordneten Oberfläche der Elektrodenfolie.

Gemäß Schritt d) erfolgt insbesondere ein Anregen zumindest des Schneidwerkzeugs durch die Schwingungseinrichtung. Infolge der Schwingungen bewegt sich zumindest das Schneidwerkzeug insbesondere in einer zur Oberfläche senkrecht orientierten Ebene. Insbesondere wird dabei auch die Partikelzuleitung bzw. ein Auslass der Partikelzuleitung oder einer Zuführeinrichtung mit angeregt. Die Partikelzuleitung oder die Zuführeinrichtung kann dazu mit dem Schneidwerkzeug gekoppelt, also verbunden sein. Über die Partikelzuleitung können zumindest die Partikel in eine, mit dem Schneidwerkzeug gekoppelte Zuführeinrichtung überführt werden.

Gemäß Schritt e) erfolgt insbesondere ein Beaufschlagen der Elektrodenfolie mit den Schwingungen des Schneidwerkzeugs über mindestens ein Partikel, das zwischen dem Schneidwerkzeug und der Elektrodenfolie angeordnet ist, so dass die Elektrodenfolie getrennt wird. Es erfolgt insbesondere kein Trennen der Elektrodenfolie durch das Auftreffen der Partikel auf der Oberfläche.

Insbesondere ist das Schneidwerkzeug an einer Sonotrode angeordnet, die durch die Schwingungseinrichtung zu Schwingungen angeregt wird. Insbesondere sind das Schneidwerkzeug und die Sonotrode durch einen Schiebermechanismus miteinander verbunden. Über den Schiebermechanismus kann das Schneidwerkzeug insbesondere einfach gewechselt werden. Dazu wird das Schneidwerkzeug in eine Aufnahme an der Sonotrode eingeschoben. Infolge der Schwingungen bewegen sich das Schneidwerkzeug insbesondere in einer zur Oberfläche senkrecht orientierten Ebene.

Eine Sonotrode ist ein Werkzeug, das durch das Einleiten von hochfrequenten mechanischen Schwingungen (z. B. Ultraschall, aber auch geringere Frequenzen) in Resonanzschwingungen versetzt wird. Über die Sonotrode kann eine Amplitude der Anregung vergrößert werden.

Anstelle des Schlitzens und Ausklinkens mit mechanischem Schneiden (unter Verwendung des Scherprinzips durch das Schneidewerkzeug) oder durch Energie (Laser), wird hier das Schneiden durch ein zu Schwingungen angeregtes Schneidwerkzeug durchgeführt. Die Schneidwirkung der Partikel bzw. des Schneidwerkzeugs kann durch die hochfrequente Anregung des Partikelstroms bzw. des Schneidwerkzeugs über die Sonotrode verstärkt werden. Das Schneidwerkzeug kontaktiert die Oberfläche insbesondere nicht unmittelbar sondern nur mittelbar über mindestens ein Partikel.

Mit dem vorgeschlagenen Verfahren ist es insbesondere möglich, hohe Geschwindigkeiten beim Schneiden zu erzielen. Darüber hinaus gibt es einen Werkzeugverschleiß nur am Schneidwerkzeug. Weiter entstehen keine Grate an den Trennkanten und keine Wärmeeinflusszone. Das Verfahren ist insbesondere für das Schlitzen geeignet. Es lässt sich jedoch auch für das Ausklinken und Abtrennen einsetzen.

Hier wird das Schneiden durch nur ein Wirkprinzip durchgeführt: durch eine Hammerwirkung eines Hammerschlagverfahrens ("hammering"). Ein Schneiden durch das Wirkprinzip eines Wurfmechanismus (Bombardierung) tritt insbesondere nicht auf.

Bei dem hier nicht angewandten Wirkprinzip des Wurfmechanismus nimmt ein, ggf. vibrierender, Gasstrom, insbesondere ein Hochgeschwindigkeits-Luftstrahl, die abrasiv wirkenden Partikel mit. Die Partikel beginnen insbesondere ebenfalls in dem Gasstrom zu vibrieren. Sowohl der Gasstrom als auch die Partikel werden in Form eines scharfen Abrasiv-Gasmessers auf den Schneidbereich der Oberfläche geschleudert. Das Schneiden erfolgt insbesondere durch die kinetische und ggf. Vibrations-Energie der vom ersten Gasstrom transportierten Partikel.

Bei dem hier angewandten Wirkprinzip, dem Hammerschlagverfahren, erfolgt ein Schneiden mittels Schwingungsanregung und abrasiv wirkenden Partikeln. Dabei wird ein Abrasivmittel auf dem Schneidbereich (hier der Oberfläche) verteilt und von einem vibrierenden Schneidwerkzeug in Schwingung versetzt. Hier liegt also eine Wechselwirkung zwischen Schneidwerkzeug und Elektrodenfolie vor. Das Schneiden erfolgt hier insbesondere durch die Vibrations-Energie des Schneidwerkzeugs und durch die abrasive Wirkung der zwischen Schneidwerkzeug und Oberfläche angeordneten und vom Schneidwerkzeug bewegten Partikel. Die Partikel können alleine oder als Mischung, z. B. zusammen mit einer Flüssigkeit, hin zum Schneidwerkzeug bzw. zur Oberfläche transportiert werden.

Insbesondere ist ein Auslass der Partikelzuleitung bzw. der Zuführeinrichtung mit dem Schneidwerkzeug gekoppelt. Insbesondere können so die Schwingungen der Schwingungseinrichtung über das Schneidwerkzeug auf den Auslass und/ oder die Partikelzuleitung bzw. die Zuführeinrichtung übertragen werden.

Insbesondere weist die Schneidvorrichtung zusätzlich eine Einhausung auf, die vor Schritt c) auf der Oberfläche angeordnet wird. In Schritt c) werden zumindest die Partikel in die Einhausung eingeleitet. Die Einhausung stellt insbesondere sicher, dass die zugeführten Partikel im Bereich des Schneidwerkzeugs verbleiben. Der durch die Einhausung begrenzte Bereich um das Schneidwerkzeug ist insbesondere möglichst klein ausgeführt, so dass die Menge an zugeführten Partikeln begrenzt werden kann. Insbesondere ist die Einhausung in einer Distanz zu dem Schneidwerkzeug angeordnet, so dass die Schwingungen des Schneidwerkzeugs nicht durch die Einhausung begrenzt oder gedämpft werden.

Insbesondere ist zumindest eine Stirnseite der Einhausung, die die Oberfläche kontaktiert, elastisch verformbar ausgeführt. Insbesondere kann so die Einhausung auf der Oberfläche angeordnet und ein Spalt zwischen Stirnseite und Oberfläche abgedichtet werden.

Insbesondere weist zumindest
- die Schwingung eine Amplitude, insbesondere an einer Spitze des Schneidwerkzeugs, von höchstens 80 Mikrometer, bevorzugt von höchstens 60 Mikrometer oder von höchstens 50 Mikrometer; bevorzugt von mindestens 10 Mikrometer oder mindestens 15 Mikrometer; oder
- die Schwingung eine Frequenz zwischen 5 kHz [Kilohertz] und 50 kHz, bevorzugt zwischen 10 kHz und 25 kHz, auf.

Wenn das Schneidwerkzeug gegenüber der Elektrodenfolie schwingt, wirken die Partikel als Eindringkörper und dringen in das Material der Elektrodenfolie ein. Bei der vorgeschlagenen Ultraschallbearbeitung erfolgt ein Materialabtrag insbesondere durch Rissentstehung, - ausbreitung und Sprödbruch des Materials.

Die Schwingungseinrichtung umfasst bevorzugt einen Wandler (piezoelektrisch oder magnetostriktiv), auf den ein hochfrequentes elektrisches Signal übertragen wird. Der Wandler wandelt das elektrische Signal in niederfrequente mechanische Schwingungen mit geringer Amplitude um. Im Wesentlichen wandelt der Wandler also elektrische Energie in mechanische Schwingungen um. Diese mechanische Schwingung wird dann an das Schneidwerkzeug bzw. die Sonotrode weitergegeben.

Die mechanischen Schwingungen im Bereich des Wandlers haben eine geringe Amplitude. Die Hauptfunktion der Sonotrode ist es, diese Schwingung zu verstärken.

Ein piezoelektrischer Wandler bzw. Kristall erzeugt einen kleinen elektrischen Strom, wenn er zusammengedrückt wird. Wenn der elektrische Strom durch den Kristall geleitet wird, dehnt er sich aus. Wenn der Strom entfernt wird, nimmt der Kristall seine ursprüngliche Größe und Form wieder an. Solche Wandler sind bis zu 900 Watt erhältlich. Piezo-Elektrokristalle haben einen hohen Umwandlungswirkungsgrad von 95%. Bei der Verwendung eines derartigen Wandlers wird ein elektrisches Signal in den Wandler eingeleitet und die dadurch erzeugte mechanische Schwingung an die Sonotrode weitergegeben.

Ein magnetostriktiver Schallwandler ändert seine Länge, wenn er einem starken Magnetfeld ausgesetzt wird. Diese Wandler werden aus Nickel oder Nickellegierungsblechen hergestellt. Ihr Umwandlungswirkungsgrad liegt bei etwa 20-30%. Solche Wandler sind bis zu 2000 Watt erhältlich. Die maximale Längenänderung, die erreicht werden kann, liegt bei etwa 25 Mikrometern. Bei der Verwendung eines derartigen Wandlers wird ein Magnetfeld in den Wandler gegeben und die dadurch erzeugte mechanische Schwingung dann der Sonotrode zugeführt.

Wegen der hohen Umwandlungseffizienz ist der piezoelektrische Wandler zu bevorzugen. Für das Schneiden von Elektrodenfolien hat sich eine niedrige Frequenz zwischen 10 kHz und 20 kHz und eine Amplitude um 50 Mikrometer als besonders geeignet herausgestellt. Die Sonotrode erhält eine Eingangsamplitude von etwa 10 bis 25 Mikrometer, wobei die Ausgangsamplitude am Ausgang dann z. B. auf 50 Mikrometer verstärkt wird.

Der Wandler wird insbesondere in Form eines Rings bereitgestellt und im Bereich eines ersten Endes des Schneidwerkzeugs bzw. der Sonotrode angeordnet. Es wird insbesondere ausschließlich die Sonotrode über den Wandler angeregt. Der Wandler kann auch in Form eines Zylinders bereitgestellt werden, der mit dem ersten Ende des Schneidwerkzeugs bzw. der Sonotrode verbunden wird.

Das Schneidwerkzeug bzw. die Sonotrode erstreckt sich zwischen einem ersten Ende und einem zweiten Ende. An dem ersten Ende werden die Schwingungen eingeleitet. An dem zweiten Ende ist die Spitze des Schneidwerkzeugs angeordnet. Ist das Schneidwerkzeug an einer Sonotrode angeordnet, wird das erste Ende der Sonotrode als das erste Ende des Schneidwerkzeug angesehen.

Die Sonotrode ist insbesondere aus Titan oder einer Titanlegierung, z. B. Ti₆Al₄V, ausgeführt.

Das Schneidwerkzeug ist insbesondere aus Wolframkarbid ausgeführt.

Die Berechnung der erforderlichen Länge einer Sonotrode, also zwischen erstem Ende und zweitem Ende des Schneidwerkzeugs, ist einer der wichtigsten Teile der Sonotrodenkonstruktion. Um Verluste zu minimieren und die maximale Energie des Schallkopfs bzw. des Wandlers auf die Sonotrode zu übertragen, sollte die Sonotrode in Resonanz mit der Betriebsfrequenz des Schallkopfs stehen. Die Länge der Sonotrode, insbesondere bis hin zur Spitze des Schneidwerkzeugs, sollte einem ungraden Vielfachen der halben Wellenlänge der Schwingung des Wandlers (lambda /2) entsprechen. Es ist insbesondere zu beachten, dass die Amplitude der Schwingung am zweiten Ende maximal ist. Der Schwingungsknoten (node) ist insbesondere am ersten Ende der Sonotrode vorgesehen, der Schwingungsbauch (antinode) am zweiten Ende bzw. an der Spitze des Schneidwerkzeugs.

Insbesondere weist das Schneidwerkzeug eine der Elektrodenfolie zugewandte Spitze mit einer kleinsten Breite von 0,2 bis 1,5 Millimetern auf. Die kleinste Breite ist insbesondere die kleinste Erstreckung der Breite. Ist z. B. die Sonotrode rechteckig ausgeführt, erstreckt sich die Spitze parallel zu der Oberfläche der Elektrodenfolie entlang einer Länge. Diese sehr viel größere Länge ist also gerade nicht als die Breite zu verstehen.

Insbesondere wird über die Partikelzuleitung eine Mischung aus zumindest den Partikeln sowie einer wasserfreien Flüssigkeit zugeführt.

Insbesondere weist die Flüssigkeit einen Anteil von höchstens 25 Gew.-%, bevorzugt von 4 bis 15 Gew.-%, besonders bevorzugt von mindestens 2 Gew.-%, an der Mischung auf.

Insbesondere umfasst die Flüssigkeit einen Bestandteil eines Karbonat-basierten Elektrolyten oder ein Paraffin-basiertes Öl. Insbesondere umfasst die Flüssigkeit einen Bestandteil eines Karbonat-basierten Elektrolyts, z. B. Ethylenkarbonat (C₃H₄O₃) oder Diethylenkarbonat (C₅H₁₀O₃), oder ein Paraffin-basiertes Öl. Wird als Flüssigkeit ein Elektrolyt-Bestandteil verwendet, ist dessen Anhaftung an der Elektrodenfolie nicht schädlich, auch nicht für den späteren Betrieb der so hergestellten Batteriezelle.

Ethylenkarbonat kann insbesondere durch Polypropylenkarbonat ergänzt werden, so dass die Flüssigkeit auch bei geringeren Temperaturen keinen festen Zustand annimmt.

Bei dem vorgeschlagenen Verfahren wird insbesondere kein Wasser zur Herstellung der Mischung verwendet, im Gegensatz zum bekannten Hammerschlagverfahren.

Die Flüssigkeit kann den Partikeln in einer Mischeinrichtung zugeführt werden. Die Flüssigkeit und die Partikel werden insbesondere gemischt und dann, z. B. als sogenannter Slurry, zur Zuführung zur Schneidvorrichtung bereitgestellt. Über die Partikelzuleitung kann die Mischung aus Partikeln und Flüssigkeit dann zugeführt werden.

Insbesondere wird als Partikel Aluminiumoxid und/ oder Siliziumkarbid und/ oder Natriumhydrogenkarbonat verwendet. Es sind auch andere Materialien verwendbar. Die Auswahl der Partikel hängt von der Abtragleistung, der Art des Arbeitsmaterials und der Bearbeitungsgenauigkeit ab. Für Elektrodenfolien wird Aluminiumoxid bevorzugt eingesetzt. Aluminiumoxid ist keramisch, nicht elektrisch leitend und ggf. in der Batteriezelle z. B. als Beschichtung des Separators vorhanden. Außerdem hat es eine hohe Härte und einen hohen elektrischen Widerstand.

Insbesondere weisen die Partikel einen größten Durchmesser von höchstens 50 Mikrometer auf. Eine Qualität der durch das Schneiden erzeugten Trennkanten kann durch kleinere Partikel erhöht werden. Bevorzugt weisen die Partikel einen größten Durchmesser von 20 bis 50 Mikrometer auf.

Insbesondere weist die Schneidvorrichtung eine Absaugeinrichtung auf, über die zumindest durch die Elektrodenfolie hindurch getretene oder auf der Oberfläche noch vorhandene Partikel abgesaugt werden. Die Absaugeinrichtung kann benachbart zu dem Schneidwerkzeug oder von dem Schneidwerkzeug durch die Elektrodenfolie beabstandet angeordnet sein. Die Absaugeinrichtung kann also zumindest gegenüberliegend zum Schneidwerkzeug angeordnet sein, wobei die Elektrodenfolie dazwischen angeordnet ist. Die durch die Elektrodenfolie hindurch tretenden Partikel können dann abgesaugt werden.

Insbesondere wird die Elektrodenfolie über Spannrollen und/oder Förderrollen geführt, so dass die Lage der Elektrodenfolie gegenüber der Schneidvorrichtung definiert ist. Die Schnittlinien verlaufen insbesondere so, dass in diesem Bereich keine Abstützung durch eine Rolle vorliegt.

Die Rollen können mit einer Oberflächenstruktur ausgeführt sein, so dass die Elektrodenfolie nicht nur in Längsrichtung (x-Richtung) sondern auch in Richtung der Breite (y-Richtung) gespannt wird. Diese auf die Elektrodenfolie übertragene Spannung kann den Trennprozess unterstützen.

Insbesondere kann die Elektrodenfolie über eine Abstützvorrichtung abgestützt werden, so dass insbesondere ein Abstand zwischen dem Schneidwerkzeug und der Oberfläche genau eingestellt werden kann. Insbesondere kann die Absaugeinrichtung zumindest teilweise in der Abstützvorrichtung integriert ausgeführt sein, so dass unterhalb der Schnittlinie und insbesondere zu jedem Zeitpunkt während des Trennens, die Absaugeinrichtung gegenüber von dem Schneidwerkzeug angeordnet ist.

Insbesondere umfasst die Schneidvorrichtung eine Heizeinrichtung, durch die die Elektrodenfolie nach Schritt e) getrocknet wird. Insbesondere umfasst die Heizeinrichtung zumindest einen Infrarotstrahler, durch den die Elektrodenfolie erwärmt werden kann, insbesondere auf 105 bis 125 Grad Celsius, bevorzugt auf ca. 120 Grad Celsius.

Mit der Heizeinrichtung kann insbesondere die Flüssigkeit der Mischung von den Trennkanten entfernt werden.

Insbesondere weist die Schneidvorrichtung eine Reinigungsvorrichtung auf, in der zumindest eine Trennkante der Elektrodenfolie zumindest durch einen mechanischen Kontakt, z. B. durch eine Bürste oder eine Rolle, oder durch einen ionisierten zweiten Gasstrom von anhaftenden Partikeln gereinigt wird. Die ggf. statisch aufgeladenen Partikel können durch den ionisierten zweiten Gasstrom neutralisiert und dann einfacher abgesaugt oder abgeblasen werden.

Die Partikel können insbesondere wiederholt genutzt werden. Dazu können die Partikel gesammelt und zurückgeführt werden, so dass sie erneut über die Partikelzuleitung dem Verfahren zugeführt werden können.

Insbesondere erfolgt das Verfahren, also das Schneiden der Elektrodenfolie während einer kontinuierlichen Förderung der Elektrodenfolie entlang einer Förderrichtung (x-Richtung).

Insbesondere für das Schlitzen (Schnittlinie verläuft entlang der Erstreckung, x-Richtung, des Endlosmaterials zur Aufteilung des breiten Ausgangsmaterials in mehrere weniger breite Streifen Endlosmaterial) wird die Elektrodenfolie gegenüber dem stationär angeordneten Schneidwerkzeug bewegt. Hier wird die vorgeschlagene Einhausung insbesondere nicht eingesetzt.

Für das Ausklinken (mit der Schnittlinie werden die Ableiter aus dem Endlosmaterial herausgebildet; die Schnittlinien verlaufen längs und quer zur Erstreckung des Endlosmaterials, also z. B. entlang der y-Richtung und der x-Richtung) ist die Elektrodenfolie gegenüber dem Schneidwerkzeug insbesondere stationär angeordnet. Dazu wird entweder das Schneidwerkzeug mit der Elektrodenfolie mitbewegt, die Förderung der Elektrodenfolie angehalten oder ein Ausgleichmechanismus bereitgestellt.

Für das Abtrennen (die Schnittlinie verläuft quer zur Erstreckung des Endlosmaterials entlang der y-Richtung; durch das Abtrennen werden die Elektrodenfolien von dem Endlosmaterial abgeschnitten und die einzelnen Lagen des Stapels gebildet) ist die Elektrodenfolie gegenüber dem Schneidwerkzeug insbesondere stationär angeordnet. Dazu wird entweder das Schneidwerkzeug mit der Elektrodenfolie mitbewegt, die Förderung der Elektrodenfolie angehalten oder ein Ausgleichmechanismus bereitgestellt.

Der Ausgleichmechanismus kann z. B. Rollensysteme umfassen, durch die die Elektrodenfolie mehrfach umgelenkt wird. Die durch Rollen definierte Umlenkpunkte können zueinander bewegt werden, so dass sich deren Entfernungen voneinander ändern. Durch den Ausgleichmechanismus kann also eine Länge der Elektrodenfolie entlang der Förderrichtung zwischen einem Elektrodenfoliencoil und der Schneidvorrichtung verändert werden. Damit kann die Elektrodenfolie kontinuierlich von dem Elektrodenfoliencoil abgewickelt werden und zeitgleich gegenüber dem Schneidwerkzeug stationär angeordnet werden.

Für das Ausklinken und/ oder das Abtrennen wird insbesondere die vorgeschlagene Einhausung eingesetzt.

Das Abprallen von der Oberfläche von Partikeln während des Schneidens tritt nur in geringem Maße auf. Daher ist das Verfahren wirtschaftlich durchführbar und sicher für einen Bediener. Beim Ausklinken und Abtrennen kann ein Abprallen vollständig verhindert werden.

Es wird weiter eine Schneidvorrichtung zum Schneiden von Elektrodenfolien, die für einen Einsatz in einer Batteriezelle vorgesehen sind, vorgeschlagen. Die Schneidvorrichtung ist zur Durchführung des beschriebenen Verfahrens geeignet ausgeführt.

Die Schneidvorrichtung umfasst zumindest ein Schneidwerkzeug, eine Schwingungseinrichtung zur Anregung zumindest des Schneidwerkzeugs zu Schwingungen und eine Partikelzuleitung zur Zuleitung zumindest von Partikeln. Das Schneidwerkzeug ist über der Elektrodenfolie in einem Abstand zu einer Oberfläche der Elektrodenfolie anordenbar und die Elektrodenfolie ist zumindest durch die auf mindestens ein Partikel übertragenen Schwingungen des Schneidwerkzeugs trennbar.

Insbesondere wird über die Partikelzuleitung eine Mischung aus zumindest den Partikeln sowie einer wasserfreien Flüssigkeit zugeführt. Die Flüssigkeit dient insbesondere der Benetzung der Partikel. Damit sind die Partikel mehr aneinander gebunden und ein Zurückprallen der auf die Oberfläche geschleuderten Partikel kann verringert bzw. verhindert werden.

Insbesondere ist das Schneidwerkzeug eine Sonotrode bzw. an einer Sonotrode angeordnet, wobei das Schneidwerkzeug durch eine Schwingungseinrichtung der Schneidvorrichtung zu Schwingungen anregbar ist. Infolge der Schwingungen wird das Schneidwerkzeug insbesondere in einer zur Oberfläche senkrecht orientierten Ebene bewegt.

Es wird weiter eine Batteriezelle vorgeschlagen, zumindest umfassend ein Gehäuse und darin angeordnet einen Stapel von Elektrodenfolien, die insbesondere durch das beschriebene Verfahren und/ oder durch die beschriebene Schneidvorrichtung hergestellt sind.

Es wird weiter ein Kraftfahrzeug vorgeschlagen, zumindest umfassend einen Traktionsantrieb und eine Batterie mit mindestens einer der beschriebenen Batteriezellen, wobei der Traktionsantrieb durch die mindestens eine Batteriezelle mit Energie versorgbar ist.

Das Verfahren ist insbesondere durch ein System zur Datenverarbeitung, z. B. ein Steuergerät, durchführbar, wobei das System Mittel aufweist, die zur Ausführung der Schritte des Verfahrens geeignet ausgestattet, konfiguriert oder programmiert sind bzw. die das Verfahren ausführen. Mit dem System kann zumindest
- eine Regelung der über die Partikelzuleitung zugeleiteten Partikel und/ oder Flüssigkeit;
- eine Regelung der Schnittgeschwindigkeit;
- eine Regelung der Schwingungseinrichtung
erfolgen.

Die Schneidvorrichtung umfasst insbesondere das vorstehend beschriebene System.

Die Mittel umfassen z. B. einen Prozessor und einen Speicher, in dem durch den Prozessor auszuführende Befehle gespeichert sind, sowie Datenleitungen oder Übertragungseinrichtungen, die eine Übertragung von Befehlen, Messwerten, Daten oder ähnlichem zwischen den angeführten Elementen ermöglichen.

Es kann weiter ein Computerprogramm vorgeschlagen, umfassend Befehle, die bei der Ausführung des Programms durch einen Computer diesen veranlassen, das beschriebene Verfahren bzw. die Schritte des beschriebenen Verfahrens auszuführen.

Es kann weiter ein computerlesbares Speichermedium vorgeschlagen, umfassend Befehle, die bei der Ausführung durch einen Computer diesen veranlassen, das beschriebene Verfahren bzw. die Schritte des beschriebenen Verfahrens auszuführen.

Die Ausführungen zu dem Verfahren sind insbesondere auf die Schneidvorrichtung, die Batteriezelle, das Kraftfahrzeug, das System zur Datenverarbeitung sowie auf das computerimplementierte Verfahren (also den Computer bzw. den Prozessor, das computerlesbare Speichermedium) übertragbar und umgekehrt.

Es werden folgende Vorteile realisiert:
- das vorgeschlagene Trennen einer Elektrodenfolie mit Partikeln ermöglicht insbesondere ein gratfreies Schneiden;
- es erzeugt keine Wärmeeinflusszone wie beim Laserschneiden;
- ein Elektrolytbestandteil, z. B. Ethylencarbonat (EC), kann als Flüssigkeit für die Mischung verwendet werden; das heißt, selbst wenn nach dem Trocknen Ethylenkarbonat an der Trennkante vorhanden ist, ist es nicht schädlich;
- insbesondere wird Aluminiumoxid für Partikel vorgeschlagen; es ist kein elektrischer Leiter und erzeugt daher keinen Kurzschluss, wenn Partikel auf der Trennkante verbleiben;
- anstelle von Ethylencarbonat, ggf. mit Additiven kann ein Paraffin-basiertes Öl verwendet werden; Paraffinöl kann zur schnellen Verdampfung mit Alkohol gemischt werden; mit der Heizvorrichtung kann das gesamte Paraffin-basierte Öl verdampft werden;
- für das Schlitzen ist insbesondere eine zylindrische bzw. eine exponentielle Kontur aufweisende Sonotrode vorgesehen; für das Ausklinken und Abtrennen ist insbesondere eine rechteckige Sonotrode vorgesehen, die insbesondere eine der Schnittlinie entsprechende Form aufweist;
- kein Partikel kann an der Trennkante haften bleiben, da der Gasstrom mit hoher Geschwindigkeit die Kantenreinigung durchführt; vor dem Aufwickeln kann eine weitere Reinigung der Trennkanten und der Oberfläche durchgeführt werden;
- das Verfahren kann mit einer sehr hohen Schnittgeschwindigkeit von ca. 150 m/min betrieben werden;
- Werkzeugverschleiß tritt nur am Schneidwerkzeug auf, das einfach wechselbar ist; aus diesem Grund ist das Verfahren sehr wirtschaftlich;
- es wird kein Gas wie beim Laserschneiden erzeugt; daher ist auch keine aufwendige Gasabsaugung erforderlich; es ist auch keine Kühlung der Elektrodenfolie notwendig, um die Wärmeeinflusszone zu reduzieren;
- das Verfahren kann sowohl zum Schlitzen als auch zum Ausklinken und Abtrennen verwendet werden;
- es wird eine sehr dünne Trennkante erzeugt, da feine Partikel, z. B. mit einem größten Durchmesser von bis zu 25 Mikrometer, verwendet werden können und die Amplitude der Schwingung der Spitze des Schneidwerkzeugs auf ca. 50 Mikrometer eingestellt werden kann;
- es wird weniger Stellfläche benötigt, da Trennen, Trocknen und Reinigen in einer einzigen Maschine, der Schneidvorrichtung integriert werden können;
- das Verfahren ist wirtschaftlich, da die Partikel mehrfach wiederverwendet werden können;
- die Sonotrode hat die Hauptfunktion, dass sie die Amplitude der Vibration verstärkt; die Sonotrode gibt eine große Amplitude an die Partikel ab, so dass die Schneidwirkung der Partikel verstärkt wird;
- die Sonotrode ist keinem Verschleiß ausgesetzt und weist daher eine hohe Lebensdauer auf;
- das Schneidwerkzeug kann verschleißfest ausgeführt sein und wird mit der Sonotrode gekoppelt bzw. verbunden; das Schneidwerkzeug ist wechselbar ausgeführt;
- ein Abprallen der Partikel von der Oberfläche der Elektrodenfolie tritt kaum auf, so dass keine zusätzliche Anordnung zum Auffangen bzw. Absaugen der abgeprallten Partikel erforderlich ist;
- für das Schlitzen wird insbesondere eine zylindrische Sonotrode mit einem entsprechend zylindrischen bzw. konischen Schneidwerkzeug eingesetzt.
- für das Ausklinken und Abtrennen wird insbesondere eine rechteckig geformte Sonotrode mit einem entsprechend rechteckigen Schneidwerkzeug eingesetzt.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine Schneidvorrichtung zum Durchführen des Verfahrens;
- Fig. 2:: ein Schneidwerkzeug mit einer ersten Ausführungsvariante einer Schwingungseinrichtung, in einer Seitenansicht;
- Fig. 3:: ein Schneidwerkzeug mit einer zweiten Ausführungsvariante einer Schwingungseinrichtung, in einer Seitenansicht;
- Fig. 4:: das Schlitzen in einer Ansicht von oben;
- Fig. 5:: eine Schneidvorrichtung zumindest für das Ausklinken und Abtrennen;
- Fig. 6:: Schritt c) des Verfahrens;
- Fig. 7:: Schritt e) des Verfahrens;
- Fig. 8:: Schritt a) eines Verfahrens für das Ausklinken und Abtrennen;
- Fig. 9:: Schritte b) bis e) des Verfahrens für das Ausklinken;
- Fig. 10:: Schritt a) des Verfahrens für das Abtrennen;
- Fig. 11:: vor Schritt b) des Verfahrens für das Abtrennen;
- Fig. 12:: Schritte b) bis e) des Verfahrens für das Abtrennen.

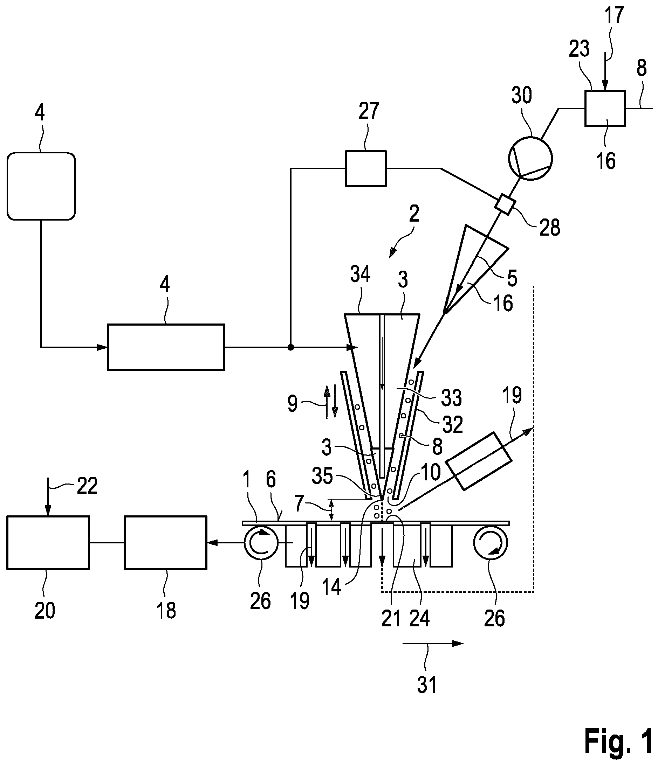

Die Fig. 1 zeigt eine Schneidvorrichtung 2 zum Durchführen des Verfahrens. Die Schneidvorrichtung 2 umfasst ein Schneidwerkzeug 3, eine Schwingungseinrichtung 4 und eine Partikelzuleitung 5 zur Zuleitung zumindest von Partikeln 8. Das Schneidwerkzeug 3 ist über der Elektrodenfolie 1 in einem Abstand 7 zu einer Oberfläche 6 der Elektrodenfolie 1 angeordnet und die Elektrodenfolie 1 wird zumindest durch die auf mindestens ein Partikel 8 übertragenen Schwingungen 9 des Schneidwerkzeugs 3 getrennt.

Gemäß Schritt a) erfolgt ein Bereitstellen einer Elektrodenfolie 1 mit einer Oberfläche 3. Die Elektrodenfolie 1 wird als Endlosmaterial bereitgestellt. Die Elektrodenfolie 1 weist zwei größte Seitenflächen mit einer theoretisch endlosen Länge in einer x-Richtung, der Förderrichtung 31, eine Breite in einer y-Richtung und eine Dicke in einer z-Richtung auf. Die Erstreckung in z-Richtung ist dabei die geringste. Eine der Seitenflächen der Elektrodenfolie 1 bildet vorliegend die Oberfläche 3.

Weiter erfolgt ein Bereitstellen einer Schneidvorrichtung 4, umfassend ein Schneidwerkzeug 3, eine Schwingungseinrichtung 4 sowie eine Partikelzuleitung 5. Weiter erfolgt ein Anordnen des Schneidwerkzeugs 3 über der Elektrodenfolie 1 in einem Abstand 7 zu der Oberfläche 6 (Schritt b)).

Gemäß Schritt c) erfolgt ein Einleiten zumindest von Partikeln 8 aus der Partikelzuleitung 5 in die Schneidvorrichtung 2. Diese Partikelzuleitung 5 dient dem Transport der Partikel 8 hin zu der Schneidvorrichtung 2 bzw. hin zu dem Schneidwerkzeug 3 bzw. hin zu der gegenüber dem Schneidwerkzeug 3 angeordneten Oberfläche 6 der Elektrodenfolie 1. Die Partikelzuleitung 5 überführt zumindest die Partikel 8 in eine Zuführeinrichtung 32, die mit dem Schneidwerkzeug 3 gekoppelt ist. Über den Auslass 10 der Zuführeinrichtung 32 treten zumindest die Partikel 8 aus der Schneidvorrichtung 2 aus und strömen hin zur Oberfläche 3.

Gemäß Schritt d) erfolgt ein Anregen zumindest des Schneidwerkzeugs 3 durch die Schwingungseinrichtung 4. Infolge der Schwingungen 9 bewegt sich zumindest das Schneidwerkzeug 3 in einer zur Oberfläche 6 senkrecht orientierten Ebene. Dabei wird auch die Zuführeinrichtung 32 mit angeregt. Diese ist dazu mit dem Schneidwerkzeug 3 gekoppelt.

Das Schneidwerkzeug 3 kontaktiert die Oberfläche 6 nicht, bzw. nicht direkt. Das Schneidwerkzeug 3 kontaktiert die Oberfläche 6 über mindestens ein Partikel 8, das zwischen dem Schneidwerkzeug 3 und der Oberfläche 6 angeordnet ist. Das Schneidwerkzeug 3 kontaktiert also das Partikel 8 und bewegt das Partikel 8 infolge der Schwingungen 9. Das derart angeregte Partikel 8 erzeugt die Schneidwirkung 9 an der Elektrodenfolie 1. Der Abstand 7 zwischen Schneidwerkzeug 3 und Oberfläche 6 kann also durch einzelne Partikel 8 überbrückt werden.

Gemäß Schritt e) erfolgt ein Beaufschlagen der Elektrodenfolie 1 mit den Schwingungen 9 des Schneidwerkzeugs 3 über mindestens ein Partikel 8, das zwischen dem Schneidwerkzeug 3 und der Elektrodenfolie 1 angeordnet ist, so dass die Elektrodenfolie 1 getrennt wird.

Das Schneidwerkzeug 3 ist an einer Sonotrode 33 angeordnet, die durch die Schwingungseinrichtung 4 zu Schwingungen 9 angeregt wird.

Das Schneidwerkzeug 3 und die Sonotrode 33 sind durch einen Schiebermechanismus miteinander verbunden. Über den Schiebermechanismus kann das Schneidwerkzeug 3 einfach gewechselt werden. Dazu wird das Schneidwerkzeug 3 in eine Aufnahme an der Sonotrode 33 eingeschoben.

Über die Partikelzuleitung 5 wird ausgehend von einer Mischeinrichtung 23 über eine Pumpe 30 eine Mischung 16 aus den Partikeln 8 sowie einer wasserfreien Flüssigkeit 17 zugeführt.

Der Strom der Mischung 16 bzw. der Flüssigkeit 17 und der Partikel 8 wird über jeweils ein Ventil 28 geregelt.

Die Schneidvorrichtung 2 weist eine Absaugeinrichtung 19 auf, über die von der Oberfläche 6 zurückprallende oder auf der Oberfläche 6 verbleibende Partikel 8 sowie durch die Elektrodenfolie 1 hindurch getretene Partikel 8 abgesaugt werden. Die Absaugeinrichtung 19 ist teilweise benachbart zu dem Schneidwerkzeug 3 angeordnet. Damit können von der Oberfläche 6 zurückprallende Partikel 8 abgesaugt werden. Zusätzlich ist ein Teil der Absaugeinrichtung 19 von dem Schneidwerkzeug 3 durch die Elektrodenfolie 1 beabstandet angeordnet. Die Absaugeinrichtung 19 ist also auch gegenüberliegend zum Schneidwerkzeug 3 angeordnet, wobei die Elektrodenfolie 1 dazwischen angeordnet ist. Die durch die Elektrodenfolie 1 hindurchtretenden Partikel 8 können dann abgesaugt werden.

Die Elektrodenfolie 1 wird über Spannrollen 26 und Förderrollen 26 geführt, so dass die Lage der Elektrodenfolie 1 gegenüber der Schneidvorrichtung 2 definiert ist. Die Schnittlinien verlaufen so, dass in diesem Bereich keine Abstützung durch eine Rolle 26 vorliegt.

Die Elektrodenfolie 1 wird über eine Abstützvorrichtung 24 abgestützt, so dass ein Abstand 7 zwischen dem Schneidwerkzeug 3 und der Oberfläche 6 genau eingestellt werden kann. Die Absaugeinrichtung 19 ist zumindest teilweise in der Abstützvorrichtung 24 integriert ausgeführt, so dass unterhalb der Schnittlinie und zu jedem Zeitpunkt während des Trennens, die Absaugeinrichtung 19 gegenüber von dem Schneidwerkzeug 3 angeordnet ist.

Die Schneidvorrichtung 2 umfasst eine Heizeinrichtung 18, durch die die von den Partikeln 8 und der Flüssigkeit 17 beaufschlagte Elektrodenfolie 1 getrocknet wird. Mit der Heizeinrichtung 18 kann die Flüssigkeit 17 der Mischung 16 von den Trennkanten 21 entfernt werden.

Die Schneidvorrichtung 2 weist eine Reinigungsvorrichtung 20 auf, in der die Trennkanten 21 der Elektrodenfolie 1 durch einen mechanischen Kontakt, z. B. durch eine Bürste oder eine Rolle, oder durch einen ionisierten Gasstrom 22 von anhaftenden Partikeln 8 gereinigt wird. Die ggf. statisch aufgeladenen Partikel 8 können durch den ionisierten Gasstrom 22 neutralisiert und dann einfacher abgesaugt oder abgeblasen werden.

Die Partikel 8 werden wiederholt genutzt. Dazu werden die Partikel 8 zumindest über die Absaugeinrichtung 19 gesammelt und zu einer Mischeinrichtung 23 für die Mischung 16 zurückgeführt, so dass sie erneut über die Partikelzuleitung 5 der Zuführeinrichtung 32 zugeführt werden können.

Über ein Steuergerät 27 könnten bestimmte Teile der Schneidvorrichtung 2 gesteuert werden.

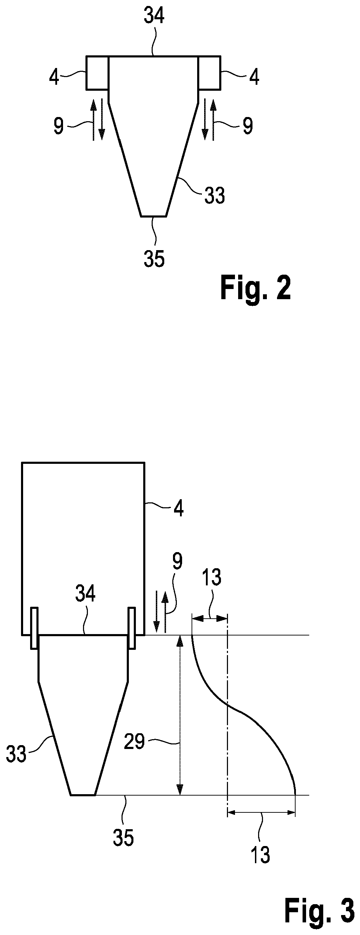

Fig. 2 zeigt ein Schneidwerkzeug 3 mit einer ersten Ausführungsvariante einer Schwingungseinrichtung 4, in einer Seitenansicht. Auf die Ausführungen zu Fig. 1 wird Bezug genommen.

Der Wandler der Schwingungseinrichtung 4 ist in Form eines Rings ausgeführt und im Bereich eines ersten Endes 34 des Schneidwerkzeugs 3 bzw. der Sonotrode 33 angeordnet. Es wird ausschließlich die Sonotrode 33 über den Wandler angeregt.

Das Schneidwerkzeug 3 bzw. die Sonotrode 33 erstreckt sich zwischen einem ersten Ende 34 und einem zweiten Ende 35. An dem ersten Ende 34 werden die Schwingungen 9 eingeleitet. An dem zweiten Ende 35 ist die Spitze 14 des Schneidwerkzeugs 3 angeordnet.

Fig. 3 zeigt ein Schneidwerkzeug 3 mit einer zweiten Ausführungsvariante einer Schwingungseinrichtung 4, in einer Seitenansicht. Auf die Ausführungen zu Fig. 2 wird Bezug genommen.

Der Wandler der Schwingungseinrichtung 4 ist in Form eines Zylinders ausgeführt, der mit dem ersten Ende 34 des Schneidwerkzeugs 3 bzw. der Sonotrode 33 verbunden ist.

Die Berechnung der Länge 29 der Sonotrode 33, also der Erstreckung zwischen erstem Ende 34 und zweitem Ende 35 des Schneidwerkzeugs 3, ist einer der wichtigsten Teile der Sonotrodenkonstruktion. Die Länge 29 der Sonotrode 33 bis hin zur Spitze 14 des Schneidwerkzeugs 3, sollte einem ungraden Vielfachen der halben Wellenlänge der Schwingung 9 des Wandlers (lambda /2) entsprechen. Es ist zu beachten, dass die Amplitude 13 der Schwingung 9 am zweiten Ende 35 maximal ist. Der Schwingungsknoten (node), also die kleinste Amplitude 13 ist am ersten Ende 34 der Sonotrode 33 vorgesehen, der Schwingungsbauch (antinode), also die größte Amplitude 13, am zweiten Ende 35 bzw. an der Spitze 14 des Schneidwerkzeugs 3.

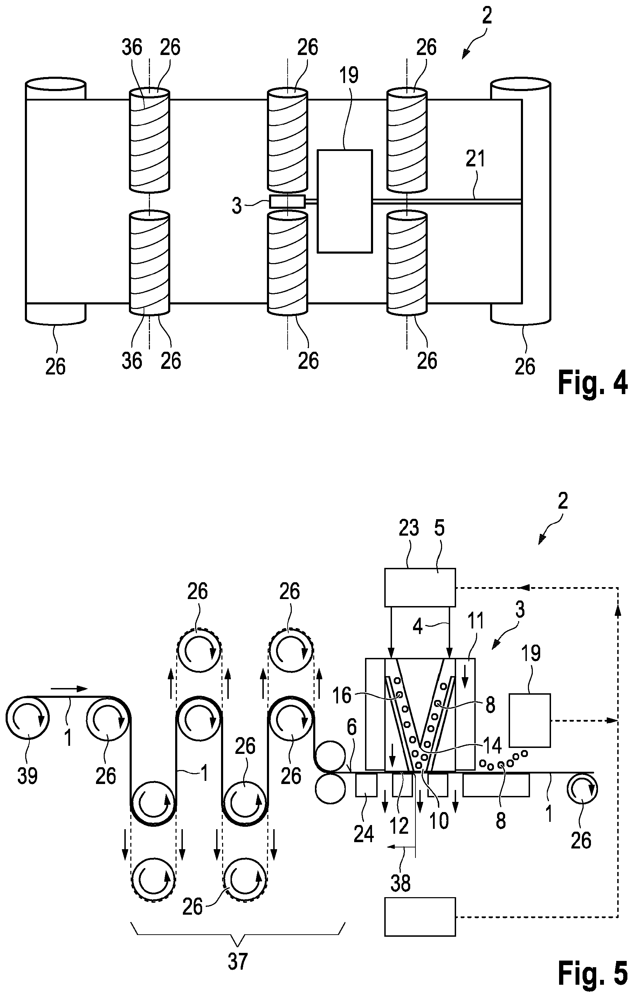

Fig. 4 zeigt das Schlitzen in einer Ansicht von oben. Auf die Ausführungen zu den Fig. 1 bis 3 wird verwiesen.

Die Elektrodenfolie 1 wird über Spannrollen 26 und Förderrollen 26 geführt, so dass die Lage der Elektrodenfolie 1 gegenüber der Schneidvorrichtung 2 definiert ist. Die Schnittlinien verlaufen so, dass in dem Bereich gegenüber dem Schneidwerkzeug 3 keine Abstützung durch eine Rolle 26 vorliegt.

Die Förderrollen 26 sind mit einer Oberflächenstruktur 36 ausgeführt, so dass die Elektrodenfolie 1 nicht nur in Längsrichtung (x-Richtung bzw. Förderrichtung 31) sondern auch in Richtung der Breite (y-Richtung) gespannt wird. Die Trennkante 21 ist hier durch Schlitzen, also entlang der x-Richtung, erzeugt.

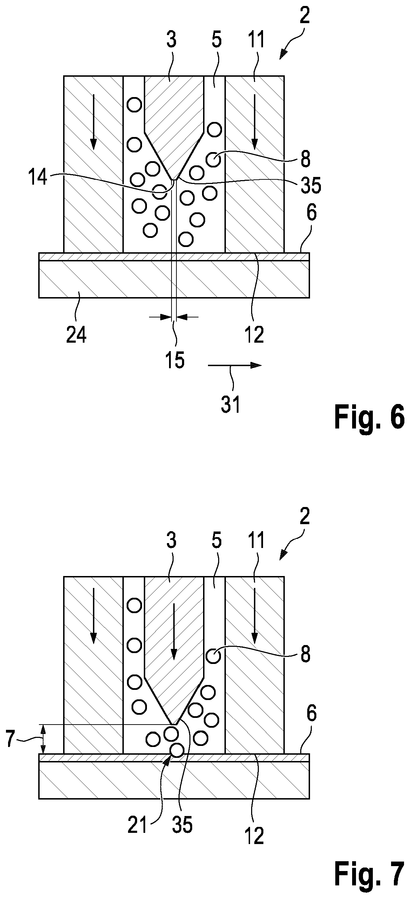

Fig. 5 zeigt eine Schneidvorrichtung 2 zumindest für das Ausklinken und Abtrennen. Fig. 6 zeigt Schritt c) des Verfahrens. Fig. 7 zeigt Schritt e) des Verfahrens. Die Fig. 5 bis 7 werden im Folgenden gemeinsam beschrieben. Auf die Ausführungen zu den Fig. 1 bis 3 wird verwiesen.

Für das Ausklinken (mit der Schnittlinie werden die Ableiter aus dem Endlosmaterial herausgebildet; die Schnittlinien verlaufen längs und quer zur Erstreckung des Endlosmaterials, also z. B. entlang der y-Richtung und der x-Richtung) ist die Elektrodenfolie 1 gegenüber dem Schneidwerkzeug 3 stationär angeordnet. Dazu wird ein Ausgleichmechanismus 37 bereitgestellt.

Auch für das Abtrennen (die Schnittlinie verläuft quer zur Erstreckung des Endlosmaterials entlang der y-Richtung; durch das Abtrennen werden die Elektrodenfolien 1 von dem Endlosmaterial abgeschnitten und die einzelnen Lagen des Stapels gebildet) ist die Elektrodenfolie 1 gegenüber dem Schneidwerkzeug 3 stationär angeordnet. Dazu wird der Ausgleichmechanismus 37 bereitgestellt.

Der Ausgleichmechanismus 37 umfasst ein Rollensystem , durch deren Rollen 26 die Elektrodenfolie 1 mehrfach umgelenkt wird. Die durch Rollen 26 definierte Umlenkpunkte können zueinander bewegt werden, so dass sich deren Entfernungen 38 voneinander ändern. Durch den Ausgleichmechanismus 37 kann also eine Länge der Elektrodenfolie 1 entlang der Förderrichtung 31 zwischen einem Elektrodenfoliencoil 39 und der Schneidvorrichtung 2 verändert werden. Damit kann die Elektrodenfolie 1 kontinuierlich von dem Elektrodenfoliencoil 39 abgewickelt werden und zeitgleich gegenüber dem Schneidwerkzeug 3 stationär angeordnet werden.

Für das Ausklinken und/ oder das Abtrennen wird eine Einhausung 11 eingesetzt. Die Einhausung 11 wird vor Schritt c) auf der Oberfläche 6 angeordnet. In Schritt c) werden zumindest die Partikel 8 in die Einhausung 11 eingeleitet. Die Einhausung 11 stellt sicher, dass die zugeführten Partikel 8 im Bereich des Schneidwerkzeugs 3 verbleiben. Der durch die Einhausung 11 begrenzte Bereich um das Schneidwerkzeug 3 ist möglichst klein ausgeführt, so dass die Menge an zugeführten Partikel 8 begrenzt werden kann. Die Einhausung 11 ist in einer Distanz zu dem Schneidwerkzeug 3 angeordnet, so dass die Schwingungen 9 des Schneidwerkzeugs 3 nicht durch die Einhausung 11 begrenzt oder gedämpft werden.

Eine Stirnseite 12 der Einhausung 11, die die Oberfläche 6 kontaktiert, ist elastisch verformbar ausgeführt. Damit kann die Einhausung 11 auf der Oberfläche 6 angeordnet und ein Spalt zwischen Stirnseite 12 und Oberfläche 6 abgedichtet werden.

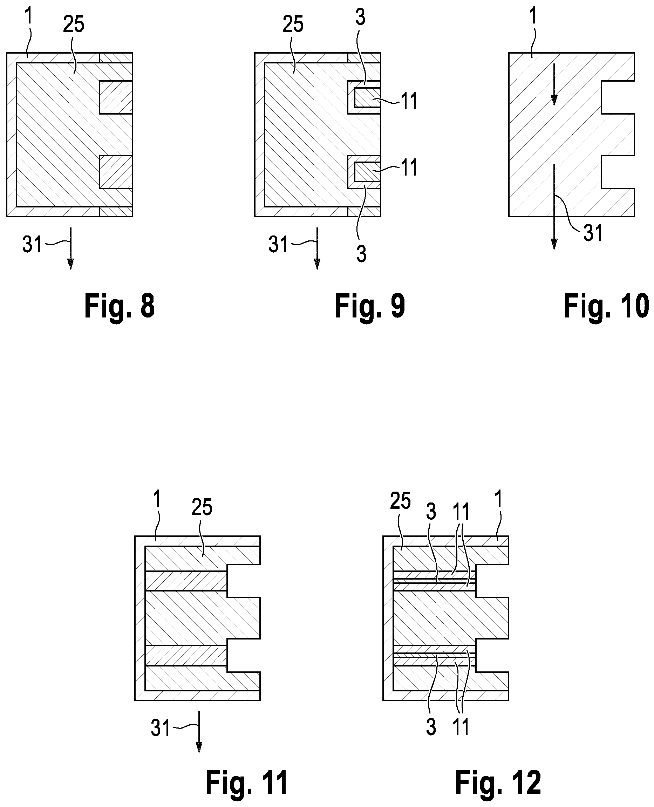

Fig. 8 zeigt Schritt a) eines Verfahrens für das Ausklinken und Abtrennen. Hier wird die Elektrodenfolie 1 als Endlosmaterial bereitgestellt und entlang einer Förderrichtung 31 transportiert. Die Förderung wird zum Ausklinken eingestellt, z. B. durch den beschriebenen Ausgleichmechanismus 37. Eine Klemmeinrichtung 25 fixiert die Elektrodenfolie 1 in ihrer Lage gegenüber dem stationär angeordneten Schneidwerkzeug 3. Die Schnittlinien bzw. der Schneidbereich ist für das Schneidwerkzeug 3 zugänglich.

Fig. 9 zeigt Schritte b) bis e) des Verfahrens für das Ausklinken. Auf die Ausführungen zu Fig. 8 wird verwiesen. Die Einhausung 11 wird auf der Elektrodenfolie 1 angeordnet. Die Partikel 8 werden in die Einhausung 11 eingeleitet. Das Schneidwerkzeug 3 wird angeregt und die Schnittlinien werden erzeugt. Das Schneidwerkzeug 3 weist eine Form auf, die der Schnittlinie nachempfunden ist (hier U-förmig).

Fig. 10 zeigt Schritt a) des Verfahrens für das Abtrennen. Die Elektrodenfolie 1 weist die gemäß Fig. 9 erzeugten Ausklinkungen auf. Auf die Ausführungen zu Fig. 9 wird verwiesen. Die Elektrodenfolie 1 wird zum nächsten Schneidvorrichtung 2 befördert.

Fig. 11 zeigt den Zustand vor Schritt b) des Verfahrens für das Abtrennen. Auf die Ausführungen zum vorhergehenden Zustand nach Fig. 10 wird verwiesen. Die Elektrodenfolie 1 wird wieder über eine Klemmeinrichtung 25 fixiert. Die Schnittlinien bzw. der Schneidbereich ist für das Schneidwerkzeug 3 zugänglich.

Fig. 12 zeigt Schritte b) bis e) des Verfahrens für das Abtrennen. Die Einhausung 11 wird auf der Elektrodenfolie 1 angeordnet. Die Partikel 8 werden in die Einhausung 11 eingeleitet. Das Schneidwerkzeug 3 wird angeregt und die Schnittlinien werden erzeugt. Das Schneidwerkzeug 3 weist eine rechteckige Form auf.

### Bezugszeichenliste

- 1: Elektrodenfolie
- 2: Schneidvorrichtung
- 3: Schneidwerkzeug
- 4: Schwingungseinrichtung
- 5: Partikelzuleitung
- 6: Oberfläche
- 7: Abstand
- 8: Partikel
- 9: Schwingung
- 10: Auslass
- 11: Einhausung
- 12: Stirnseite
- 13: Amplitude
- 14: Spitze
- 15: Breite
- 16: Mischung
- 17: Flüssigkeit
- 18: Heizeinrichtung
- 19: Absaugeinrichtung
- 20: Reinigungsvorrichtung
- 21: Trennkante
- 22: Gasstrom
- 23: Mischeinrichtung
- 24: Abstützvorrichtung
- 25: Klemmeinrichtung
- 26: Rollen
- 27: Steuergerät
- 28: Ventil
- 29: Länge
- 30: Pumpe
- 31: Förderrichtung
- 32: Zuführeinrichtung
- 33: Sonotrode
- 34: erstes Ende
- 35: zweites Ende
- 36: Oberflächenstruktur
- 37: Ausgleichmechanismus
- 38: Entfernung
- 39: Elektrodenfoliencoil

## Patentansprüche

1. Verfahren zum Schneiden von Elektrodenfolien (1), die für einen Einsatz in einer Batteriezelle vorgesehen sind; wobei das Verfahren mit zumindest einer Schneidvorrichtung (2), umfassend zumindest ein Schneidwerkzeug (3), eine Schwingungseinrichtung (4) und eine Partikelzuleitung (5), ausgeführt wird und zumindest die folgenden Schritte aufweist:
a) Bereitstellen einer Elektrodenfolie (1) mit einer Oberfläche (6);
b) Anordnen des Schneidwerkzeugs (3) über der Elektrodenfolie (1) in einem Abstand (7) zu der Oberfläche (6);
c) Einleiten zumindest von Partikeln (8) aus der Partikelzuleitung (5) in die Schneidvorrichtung (2)
d) Anregen des Schneidwerkzeugs (3) zu Schwingungen (9) durch die Schwingungseinrichtung (4);
e) Beaufschlagen der Elektrodenfolie (1) mit den Schwingungen (9) des Schneidwerkzeugs (3) über mindestens ein Partikel (8), das zwischen dem Schneidwerkzeug (3) und der Elektrodenfolie (1) angeordnet ist, so dass die Elektrodenfolie (1) getrennt wird; wobei die Partikel (8) auf der Oberfläche (6) verteilt und von dem Schneidwerkzeug (3) in Schwingung (9) versetzt werden, so dass das Schneiden durch die Vibrations-Energie des Schneidwerkzeugs (3) und durch die abrasive Wirkung der zwischen Schneidwerkzeug (3) und Oberfläche (6) angeordneten und vom Schneidwerkzeug (3) bewegten Partikel (8) erfolgt.

2. Verfahren nach Patentanspruch 1, wobei das Schneidwerkzeug (3) an einer Sonotrode (33) angeordnet ist, die durch die Schwingungseinrichtung (4) zu Schwingungen (9) angeregt wird.

3. Verfahren nach einem der vorhergehenden Ansprüche, wobei ein Auslass (10) der Partikelzuleitung (5) mit dem Schneidwerkzeug (3) gekoppelt ist.

4. Verfahren nach einem der vorhergehenden Ansprüche, wobei die Schneidvorrichtung (2) zusätzlich eine Einhausung (11) aufweist, die vor Schritt c) auf der Oberfläche (6) angeordnet wird; wobei in Schritt c) die Partikel (8) in die Einhausung (11) eingeleitet werden.

5. Verfahren nach Patentanspruch 4, wobei zumindest eine Stirnseite (12) der Einhausung (11), die die Oberfläche (6) kontaktiert, elastisch verformbar ausgeführt ist.

6. Verfahren nach einem der vorhergehenden Patentansprüche, wobei zumindest die Schwingung (9) eine Amplitude (13) von höchstens 80 Mikrometer aufweist oder die Frequenz der Schwingung (9) zwischen 5 kHz und 50 kHz beträgt.

7. Verfahren nach einem der vorhergehenden Patentansprüche, wobei das Schneidwerkzeug (3) eine der Elektrodenfolie (1) zugewandte Spitze (14) mit einer kleinsten Breite (15) von 0,2 bis 1,5 Millimetern aufweist.

8. Verfahren nach einem der vorhergehenden Patentansprüche, wobei über die Partikelzuleitung (5) eine Mischung (16) aus zumindest den Partikeln (8) sowie einer wasserfreien Flüssigkeit (17) zugeführt wird.

9. Verfahren nach Patentanspruch 8, wobei die Flüssigkeit (17) einen Anteil von höchstens 25 Gew.-% an der Mischung (16) aufweist.

10. Verfahren nach einem der Patentansprüche 8 und 9, wobei die Flüssigkeit (17) einen Bestandteil eines Karbonat-basierten Elektrolyten oder ein Paraffin-basiertes Öl umfasst.

11. Verfahren nach einem der vorhergehenden Patentansprüche, wobei die Schneidvorrichtung (2) eine Heizeinrichtung (18) umfasst, durch die die Elektrodenfolie (1) nach Schritt e) getrocknet wird.

12. Schneidvorrichtung (2) zum Schneiden von Elektrodenfolien (1), die für einen Einsatz in einer Batteriezelle vorgesehen sind, zumindest umfassend ein Schneidwerkzeug (3) und eine Partikelzuleitung (5) zur Zuleitung zumindest von Partikeln (8); wobei das Schneidwerkzeug (3) über der Elektrodenfolie (1) in einem Abstand (7) zu einer Oberfläche (6) der Elektrodenfolie (1) anordenbar ist; **dadurch gekennzeichnet, dass** die Schneidvorrichtung (2) eine Schwingungseinrichtung (4) zur Anregung zumindest des Schneidwerkzeugs (3) zu Schwingungen (9) umfasst; dass die Elektrodenfolie (1) zumindest durch die auf mindestens ein Partikel (8) übertragenen Schwingungen (9) des Schneidwerkzeugs (3) trennbar ist; und dass die Schneidvorrichtung (2) ein Steuergerät (27) umfasst, das Mittel aufweist, die zur Ausführung der Schritte des Verfahrens nach einem der vorhergehenden Patentansprüche geeignet ausgestattet ist.

## Claims

1. Method for cutting electrode foils (1) which are provided for use in a battery cell; wherein the method is carried out by means of at least one cutting apparatus (2), comprising at least one cutting tool (3), a vibration device (4) and a particle feed line (5), and has at least the following steps:
a) providing an electrode foil (1) with a surface (6);
b) arranging the cutting tool (3) above the electrode foil (1) at a distance (7) from the surface (6);
c) introducing at least particles (8) from the particle feed line (5) into the cutting apparatus (2);
d) exciting the cutting tool (3) to vibrate (9) by way of the vibration device (4);
e) applying the vibrations (9) of the cutting tool (3) to the electrode foil (1) via at least one particle (8) located between the cutting tool (3) and the electrode foil (1), with the result that the electrode foil (1) is separated;
wherein the particles (8) are distributed on the surface (6) and are set in vibration (9) by the cutting tool (3), with the result that the cutting is effected by the vibration energy of the cutting tool (3) and by the abrasive effect of the particles (8) which are located between the cutting tool (3) and the surface (6) and moved by the cutting tool (3).

2. Method according to Claim 1, wherein the cutting tool (3) is arranged on a sonotrode (33), which is excited to vibrate (9) by way of the vibration device (4).

3. Method according to any of the preceding claims, wherein an outlet (10) of the particle feed line (5) is coupled to the cutting tool (3).

4. Method according to any of the preceding claims, wherein the cutting apparatus (2) additionally has an enclosure (11), which is arranged on the surface (6) prior to step c); wherein in step c) the particles (8) are introduced into the enclosure (11).

5. Method according to Claim 4, wherein at least one end side (12) of the enclosure (11) that contacts the surface (6) is elastically deformable.

6. Method according to any of the preceding claims, wherein at least the vibration (9) has an amplitude (13) of at most 80 micrometres or the frequency of the vibration (9) is between 5 kHz and 50 kHz.

7. Method according to any of the preceding claims, wherein the cutting tool (3) has a tip (14) which faces towards the electrode foil (1) and has a smallest width (15) of 0.2 to 1.5 millimetres.

8. Method according to any of the preceding claims, wherein a mixture (16) of at least the particles (8) and an anhydrous liquid (17) is fed in via the particle feed line (5).

9. Method according to Claim 8, wherein the liquid (17) has a proportion of at most 25% by weight of the mixture (16).

10. Method according to either of Claims 8 and 9, wherein the liquid (17) comprises a constituent of a carbonate-based electrolyte or a paraffin-based oil.

11. Method according to any of the preceding claims, wherein the cutting apparatus (2) comprises a heating device (18) which dries the electrode foil (1) after step e).

12. Cutting apparatus (2) for cutting electrode foils (1) which are provided for use in a battery cell, at least comprising a cutting tool (3) and a particle feed line (5) for feeding in at least particles (8); wherein the cutting tool (3) can be arranged above the electrode foil (1) at a distance (7) from a surface (6) of the electrode foil (1); **characterized in that** the cutting apparatus (2) comprises a vibration device (4) for exciting at least the cutting tool (3) to vibrate (9); **in that** the electrode foil (1) is separable at least by way of the vibrations (9) of the cutting tool (3) that are transmitted to at least one particle (8); and **in that** the cutting apparatus (2) comprises a control unit (27) having means suitable for carrying out the steps of the method according to any of the preceding claims.

## Revendications

1. Procédé de découpe de feuilles d'électrode (1), prévues pour une utilisation dans une cellule de batterie, le procédé étant mis en œuvre à l'aide d'au moins un dispositif de découpe (2), comprenant au moins un outil de découpe (3), un appareil de vibration (4) et une conduite d'alimentation en particules (5), et comprenant au moins les étapes suivantes :
a) la fourniture d'une feuille d'électrode (1) présentant une surface (6) ;
b) l'agencement de l'outil de découpe (3) au-dessus de la feuille d'électrode (1), à une distance (7) de la surface (6) ;
c) l'introduction d'au moins des particules (8) provenant de la conduite d'alimentation en particules (5) dans le dispositif de découpe (2)
d) la mise en vibration (9) de l'outil de découpe (3) à l'aide de l'appareil de vibration (4) ;
e) l'application des vibrations (9) de l'outil de découpe (3) à la feuille d'électrode (1) par l'intermédiaire d'au moins une particule (8), disposée entre l'outil de découpe (3) et la feuille d'électrode (1), de sorte que la feuille d'électrode (1) est séparée ; les particules (8) étant réparties sur la surface (6) et mises en vibration (9) par l'outil de découpe (3), de sorte que la découpe est effectuée par l'énergie vibratoire de l'outil de découpe (3) et par l'action abrasive des particules (8), disposées entre l'outil de découpe (3) et la surface (6) et mises en mouvement par l'outil de découpe (3).

2. Procédé selon la revendication 1, dans lequel l'outil de découpe (3) est disposé sur un sonotrode (33), qui est mise en vibration (9) par l'appareil de vibration (4).

3. Procédé selon l'une quelconque des revendications précédentes, dans lequel une sortie (10) de la conduite d'alimentation en particules (5) est couplée à l'outil de découpe (3).

4. Procédé selon l'une quelconque des revendications précédentes, dans lequel le dispositif de découpe (2) comprend en outre une enceinte (11), qui est disposée sur la surface (6) avant l'étape c), les particules (8) étant introduites dans l'enceinte (11) lors de l'étape c).

5. Procédé selon la revendication 4, dans lequel au moins une face d'extrémité (12) de l'enceinte (11), qui est en contact avec la surface (6), est réalisée de manière à être élastiquement déformable.

6. Procédé selon l'une quelconque des revendications précédentes, dans lequel au moins la vibration (9) présente une amplitude (13) d'au plus 80 micromètres ou la fréquence de la vibration (9) est comprise entre 5 kHz et 50 kHz.

7. Procédé selon l'une quelconque des revendications précédentes, dans lequel l'outil de découpe (3) présente une pointe (14), tournée vers la feuille d'électrode (1), ayant une largeur minimale (15) de 0,2 à 1,5 millimètres.

8. Procédé selon l'une quelconque des revendications précédentes, dans lequel un mélange (16) d'au moins les particules (8) ainsi que d'un liquide anhydre (17) est amené par la conduite d'alimentation en particules (5).

9. Procédé selon la revendication 8, dans lequel le liquide (17) représente une proportion d'au plus 25 % en poids du mélange (16).

10. Procédé selon l'une quelconque des revendications 8 et 9, dans lequel le liquide (17) comprend un constituant d'un électrolyte à base de carbonate ou une huile à base de paraffine.

11. Procédé selon l'une quelconque des revendications précédentes, dans lequel le dispositif de découpe (2) comprend un dispositif de chauffage (18), au moyen duquel la feuille d'électrode (1) est séchée après l'étape e).

12. Dispositif de découpe (2) destiné à découper des feuilles d'électrode (1), prévues pour une utilisation dans une cellule de batterie, comprenant au moins un outil de découpe (3) et une conduite d'alimentation en particules (5) destinée à amener au moins des particules (8), l'outil de découpe (3) pouvant être disposé au-dessus de la feuille d'électrode (1), à une distance (7) d'une surface (6) de la feuille d'électrode (1), **caractérisé en ce que** le dispositif de découpe (2) comprend un appareil de vibration (4) destiné à mettre au moins l'outil de découpe (3) en vibration (9) ; **en ce que** la feuille d'électrode (1) peut être séparée au moins par les vibrations (9) de l'outil de découpe (3) transmises à au moins une particule (8) ; et **en ce que** le dispositif de découpe (2) comprend une unité de commande (27) comportant des moyens équipés de manière à être aptes à exécuter les étapes du procédé selon l'une quelconque des revendications précédentes.
